# EUROPEAN PATENT SPECIFICATION

(11) **EP 2 999 913 B1**
(45) Date of publication and mention of the grant of the patent: **25.07.2018**
(21) Application number: 14725172.2
(22) Date of filing: 20.05.2014
(51) Int. Cl.: F17C 13/04

(54) **A PRESSURISED FLUID CONTAINER**
UNTER DRUCK STEHENDER FLUIDBEHÄLTER
RÉCIPIENT À FLUIDE PRESSURISÉ

(30) Priority: 20.05.2013 GB 201309080
(43) Date of publication of application: 30.03.2016
(60) Divisional application: 16194401.2
(73) Proprietor: Linde Aktiengesellschaft, 80331 München (DE)
(72) Inventor: MELLORS, Mark, Hitchin Hertfordshire SG4 0NX (GB)
(74) Representative: Richmond, Sarah
(86) International application number: PCT/EP2014/060315
(87) International publication number: WO 2014/187809

(56) References cited:
- EP-A1- 1 421 305
- FR-A1- 2 803 366
- FR-A1- 2 979 687
- JP-A- 2008 039 156
- US-A- 2 918 976

## Description

The present invention relates to a pressurised fluid container having a shut-off valve.

In particular, the invention relates to a pressurised gas cylinder for use, for example, with medical gasses, welding gasses and the like.

Such cylinders are traditionally provided with a shut off valve at the top of the cylinder which is protected by a guard. The valve has a valve element which is moved towards and away from a seat by rotation of a screw mechanism. This consists of a hand wheel with a male screw which mates with a female screw thread in the valve body. The user can therefore open and close the shut off valve by rotating the hand wheel to raise and lower the valve element.

Although such mechanisms are widely used, they suffer from a number of problems. The hand wheel requires multiple rotations in order to rotate it which is time consuming and it is not particularly accessible when the guard is in place. Further, it can be stuck in a fully open or a fully closed position. Although arrows are usually present on the wheel to indicate the direction of opening and closing to the user, it is difficult to determine by sight the current position of the wheel, such that the user can, for example, attempt to open an already fully open valve and mistakenly believe the valve to be stuck.

A further difficulty with the fact that there is no clear indication of position is that a user may not fully close a valve as there is no clear indication that the valve has reached the fully closed position, thereby leading to inadvertent leakage from the container.

A number of these problems are overcome by using a lever in place of a hand wheel.

With a lever, there is required to be an eccentric coupling such as a cam or a crank which translates the rotational movement of the lever into linear movement of the valve stem and valve element. There may be a number of components in this coupling, all of which will introduce tolerance issues into the coupling. Also, various components of the eccentric coupling and the valve element itself are subjected to wear which cause variations in their dimensions. To compensate for this, an amount of linear play is introduced between the eccentric coupling and the valve stem to ensure that the valve element correctly seats for all valves even as they wear. This takes the form of a degree of freedom for the coupling to move a short distance in the direction of closing of the valve stem/element without engaging with the valve stem.

As a result of this, however, when the valve is closed, the lever has to be lifted a short distance before it engages with the valve element. This means that the lever is free to rattle around which can be noisy during transportation and even result in damage if repeated for long enough. Further, it creates a poor perception of the quality of the valve closure mechanism.

JP 2008 039156 A discloses a toggle valve where the shaking of an operation lever is eliminated by pressing a parallel part to a plane part.

According to the present invention, there is provided a pressurised cylinder according to claim 1.

By providing a resilient member to hold the eccentric coupling and lever in the fully closed position, the resilient member will resist any small forces of a magnitude which will tend to rattle the lever. Further, because the resilient member is dedicated to biasing the eccentric coupling when the lever is in the closed position, it can provide a relatively small biasing force as it does not need to contribute to a biasing force to close the valve element. As this provides a relatively weak force, it is easy for the user to overcome the force of this resilient member when opening the lever. To assist this, the force provided by the resilient member on the lever is arranged to begin to decrease at a point during movement of the lever to an open position.

The resilient member may be an internal one. However, preferably the valve element and valve stem are contained in a valve body, and wherein the resilient member fits over the valve body. If the resilient member is damaged, it is then easy to replace. More preferably, the resilient member is a spring clip that biases a connecting pin that is part of the eccentric coupling.

The amount of play may be provided, for example, by the valve element having a projection which engages with a slot in the eccentric coupling which is elongate in the lateral direction. However, preferably, the play is provided by the eccentric coupling having a pin via which it is coupled to an elongate slot in the valve stem. The amount of play is preferably less than 2mm and is preferably approximately 1mm.

The resilient member provides a force of preferably less than 70N and more preferably less than 50N on the eccentric coupling when the valve is closed.

Preferably, the valve element is biased closed by a spring. More preferably, the lever is configured to pass through a top dead centre position moving from the closed to the open positions and the spring is arranged to bias the lever open in the open position. In this case, preferably, the peak force generated by the resilient member is less than 10% and preferably less than 5% of the peak force generated by the spring. The spring provides a strong bi-stable arrangement preventing the lever from being accidentally dislodged from the fully open or fully closed position. The resilient member prevents rattling of the lever in the closed position, but otherwise does not unduly influence the lever operation.

An example of a cylinder in accordance with the present invention will now be described with reference to the accompanying drawings, in which:
Fig. 1 is a cross section through the top of the cylinder and the valve body;
Fig. 2 is a cross section taken along lines II to II in Fig. 1;
Fig. 3 is a perspective view of the valve body;
Fig. 4 shows the top portion of Fig. 1 in greater detail;
Fig. 5 shows a front view of the top portion of the valve body showing the return spring in greater detail;
Fig. 6 is a side view similar to Fig. 5; and
Figs. 7A to 7C are graphs showing forces felt by a user against angular displacement for the spring clip, the spring and the two combined respectively.

The fluid cylinder consists of a cylinder body 1 for a pressurised fluid and a valve body 2. The cylinder 1 is provided with a female screw thread 3 which mates with a male screw thread 4 on an outer surface of the lower portion of the valve body 2.

The valve body has an axial gas outlet path 5 extending centrally up through the valve body 2. Flow through the gas outlet path 5 is controlled by a valve element 6 which selectively blocks flow to a gas outlet port 7. The lateral port 8 of the pressure side of the valve element 6 leads to a pressure gauge G as is well known in the art.

The pressurised gas path is sealed above the valve element 6 by an inner 9 and outer 10 high pressure O-ring seal.

Lifting the valve element 6 from its seat 11 selectively opens and closes the gas flow path out of the cylinder.
The mechanism for lifting the valve element 6 will now be described.

The valve element 6 is biased closed by a spring 15 the top end of which bears against a shoulder 16 in the valve body and the bottom of which bears against an annular flange 17 which forms part of the valve stem 18. As shown in the drawings, the valve stem 18 comprises a main stem 19, a valve element retaining member 20 and a valve element coupling 21 all of which are rigidly fixed together.

In order to open the valve element 6 against the action of the spring 15, a lever mechanism is provided. This comprises a lever 27 which is connected via a pair of bosses 28 and shear pins 29 to be rotatable with a shaft 31 about fixed lever axis L. The shear pins project from both ends of the shaft 31 into the bosses 28 and protect the valve mechanism against unexpected forces about the lever axis L in the opening direction.

A stop protrudes from the valve body 2 and acts as a stop for the lever 27 in the closed position. A part of the lever 27 bears against the stop so that unwanted closing force on the lever is transmitted to the stop not to the valve element.

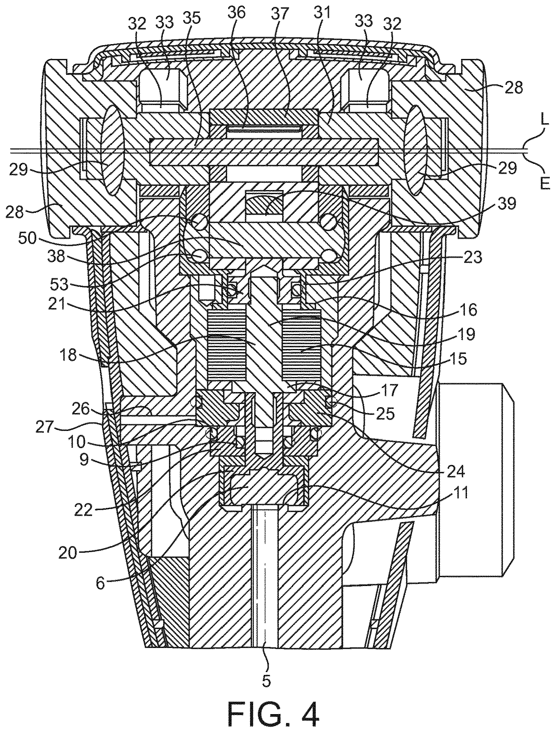

The shaft is mounted in bearings 32 in respective bosses 33 at the top of the valve body as best shown in Fig. 4. An eccentric pin 35 forms a central portion of the shaft 31 and is mounted to rotate about an eccentric axis E off-set from lever axis L and which moves as the lever 27 is operated. A linkage member 37 is rotatably mounted to the eccentric pin 35 via pin bearings and extends at its lower end to a connecting pin 38 which extends through and is coupled to an elongate orifice 39 in the valve element coupling member 21.

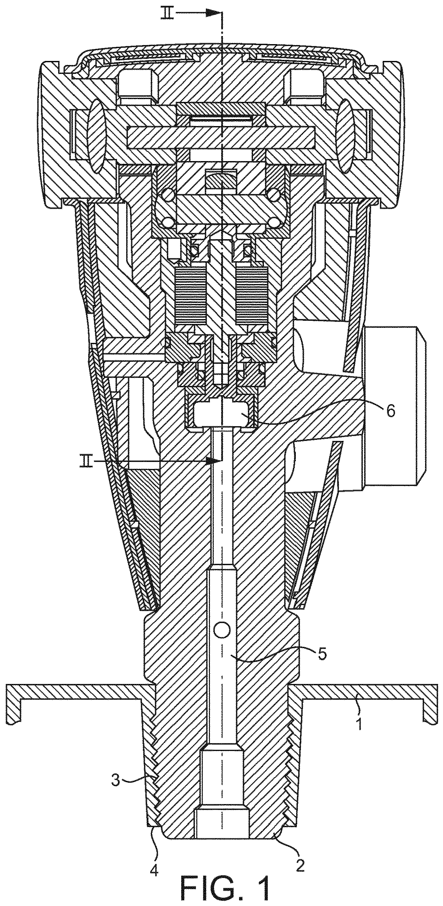

This provides a crank arrangement whereupon lifting the lifting lever 27 from its at rest position shown in Figs. 1 and 4 initially causes upward movement of the connecting pin 38 and hence the valve element, thereby compressing a spring 15. This effectively ensures that the valve is locked in the closed position as the spring force must be overcome before the valve can be opened. Once the lever 27 reaches an over-centre position, the direction of the force applied by the lever to the connecting pin 38 is reversed and this, together with the energy stored in the spring by the initial compression and the gas pressure in the cylinder causes the valve element 6 to snap open.

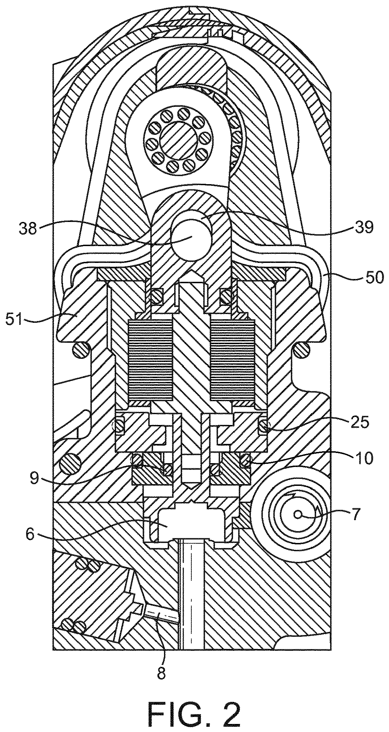

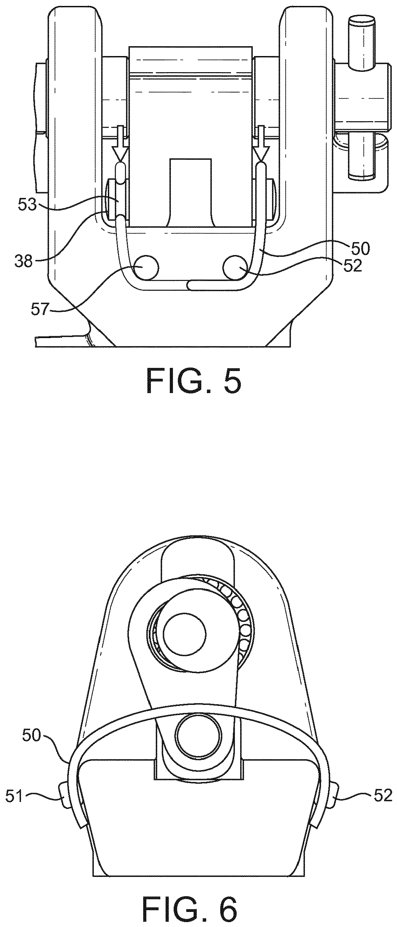

As can be appreciated particularly from Figs. 2 and 5, which show the valve in the closed position, there is a clearance above the connecting pin 38 between this pin and the elongate orifice 30. As a result of this, initial movement of the lever 27 encounters almost no resistance and is therefore readily able to lift the connecting pin 38 within the elongate orifice 39. This could cause the lever to rattle during transportation.

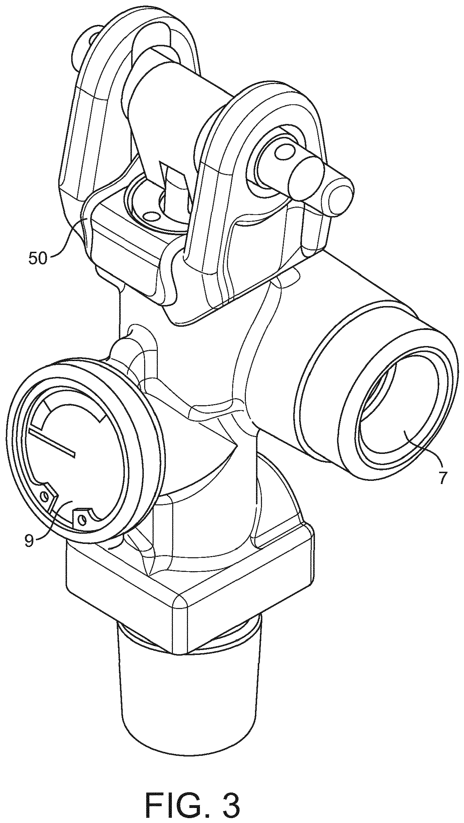

In order to prevent this, a spring clip 50 is provided. As shown from a combination of Figs. 2 to 6, the spring clip 50 is retained underneath an elongate boss 51 on one side of the valve body and a pair of bosses 52 on the opposite side.

There could, however, be one or two bosses on either side as necessary.

As shown in Figs. 4 to 6, the spring clip 50 extends over both ends of the connecting pin 38 and is retained in grooves 53. As can best be seen from Fig. 4, the presence of the spring clip 50 provides a downwardly biasing force of approximately 50N on the connecting pin 38 which resists any small forces which would otherwise tend to vibrate the lever 27.

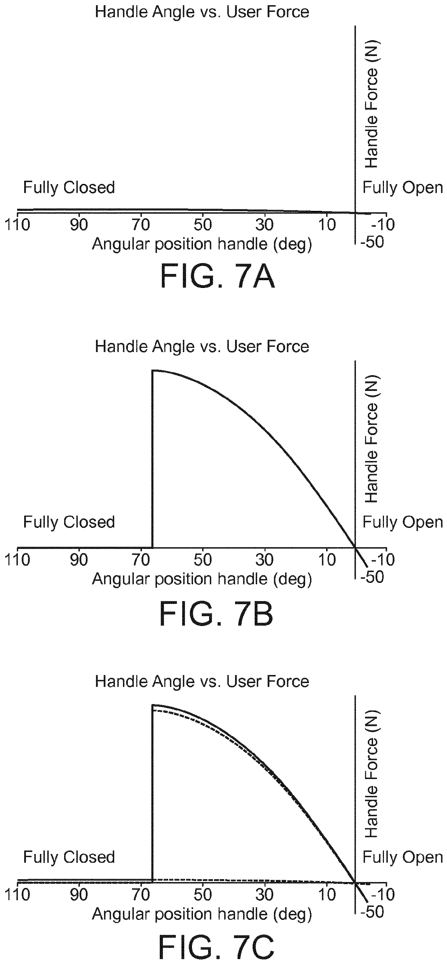

The opening operation will now be described in greater detail with reference to Figs. 7A to 7C which are graphs showing the force felt by the user on the lever in various angular positions. Fig. 7A shows the force attributable to the spring clip 50, Fig. 7B shows the force attributable to the spring 15 and Fig. 7C shows the combined force. The purpose of the spring 15 is to provide a strong bi-stable force which provides a relatively strong biasing force on the valve element 6 and then to provide a biasing force holding the valve open when the lever is open, the lever having passed through a top dead centre position in a transition from the closed to the open position. This spring therefore holds the valve in the open and closed positions and prevents accidental opening or closing of the valve. The spring clip 50 is simply provided to give a relatively weak biasing force on the coupling and hence the lever when in the closed position to prevent the lever from rattling.

This is apparent from Fig. 7A which shows that the spring clip 50 produces a small force in the fully closed position which is sufficient to prevent this rattling. This force then tapers off as the lever is opened and the aim is to provide as small a force as possible from the spring clip once the connecting pin 38 has reached the top of the elongate orifice 30.

By contrast, the force provided by the spring 15 is initially 0 as the pin 38 is travelling up the elongate orifice 30. Once it reaches the top of the slot, the pin begins to lift the valve element against the force of the spring 15 providing a sharp increase in force as shown in Fig. 7B. The force experienced by the user then drops away as the handle approaches top dead centre. As it passes top dead centre, the spring snaps the handle open. This is represented in Figs. 7B and 7C by the force curve crossing the axis and becoming negative shortly before the fully open position.

As can be appreciated from Fig. 7C, the spring clip has little effect other than during the first part of the motion of the lever away from the fully closed position.

## Claims

1. A pressurised cylinder (1) having a shut-off valve, the shut-off valve comprising a valve element (6) which seals with the valve seat (11), a valve stem (18) coupled to the valve element (6), the valve stem (18) being movable linearly to selectively move the valve element (6) towards and away from the valve seat (11) to selectively open the valve; a lever (27) coupled via an eccentric coupling to the valve stem (18), such that rotation of the lever (27) about a pivot axis causes the linear movement of the valve element (6); wherein between the eccentric coupling and the valve stem (18), there is an amount of play (39) in the direction of opening of the valve, the cylinder further comprising a resilient member (50) dedicated to providing a biasing force on the eccentric coupling when the lever (27) is in a closed position, which holds the eccentric coupling and hence the lever (27) in a fully closed position, **characterised in that** the force provided by the resilient member (50) on the lever (27) is arranged to begin to decrease at a point during movement of the lever to an open position.

2. A pressurised cylinder (1) according to claim 1, wherein the valve element (6) and valve stem (18) are contained in a valve body (2), and wherein the resilient member (50) fits over the valve body (2).

3. A pressurised cylinder (1) according to claim 1 or claim 2, wherein the play (39) is provided by the eccentric coupling having a connecting pin (38) via which it is coupled to an elongate slot in the valve stem (18).

4. A pressurised cylinder (1) according to claim 3, wherein the resilient member (50) is a spring clip that biases the connecting pin (38) that is part of the eccentric coupling.

5. A pressurised cylinder (1) according to any one of the preceding claims, wherein the amount of play (39) is less than 2 mm and preferably approximately 1 mm.

6. A pressurised cylinder (1) according to any one of the preceding claims, wherein the maximum force provided by the resilient member (50) is less than 70 N and more preferably less than 50 N.

7. A pressurised cylinder (1) according to anyone of the preceding claims, wherein the valve element (6) is biased by a spring (15).

8. A pressurised cylinder (1) according to claim 7, wherein the lever (27) is configured to pass through a top dead centre position moving from the closed to the open positions and the spring (15) is arranged to bias the lever (27) open in the open position.

9. A pressurised cylinder (1) according to claim 7 or claim 8, wherein the peak force generated by the resilient member (50) is less than 10% and preferably less than 5% of the peak force generated by the spring (15).

## Patentansprüche

1. Druckzylinder (1) mit einem Sperrventil, wobei das Sperrventil ein Ventilelement (6), das mit dem Ventilsitz (11) abdichtet, einen mit dem Ventilelement (6) gekoppelten Ventilschaft (18), wobei der Ventilschaft (18) linear bewegbar ist, um gezielt das Ventilelement (6) zum und weg vom Ventilsitz (11) zu bewegen, um das Ventil gezielt zu öffnen; einen über eine exzentrische Kopplung mit dem Ventilschaft (18) gekoppelten Hebel (27), sodass Drehung des Hebels (27) um eine Drehachse die lineare Bewegung des Ventilelements (6) bewirkt, umfasst; wobei es zwischen der exzentrischen Kopplung und dem Ventilschaft (18) einen Betrag von Spiel (39) in der Öffnungsrichtung des Ventils gibt, wobei der Zylinder ferner ein elastisches Element (50) umfasst, das dazu dient, eine Vorspannkraft auf die exzentrische Kopplung zu wirken, wenn sich der Hebel (27) in einer geschlossenen Position befindet, was die exzentrische Kopplung und damit den Hebel (27) in einer vollständig geschlossenen Position hält, **dadurch gekennzeichnet, dass** die durch das elastische Element (50) auf den Hebel (27) gewirkte Kraft so beschaffen ist, dass sie an einem Punkt während der Bewegung des Hebels in eine offene Position beginnt sich zu verringern.

2. Druckzylinder (1) nach Anspruch 1, wobei das Ventilelement (6) und der Ventilschaft (18) in einem Ventilkörper (2) enthalten sind, und wobei das elastische Element (50) über den Ventilkörper (2) passt.

3. Druckzylinder (1) nach Anspruch 1 oder Anspruch 2, wobei das Spiel (39) dadurch bereitgestellt wird, dass die exzentrische Kopplung einen Verbindungsstift (38) hat, über den sie mit einem länglichen Schlitz im Ventilschaft (18) gekoppelt ist.

4. Druckzylinder (1) nach Anspruch 3, wobei das elastische Element (50) eine Federklemme ist, die den Verbindungsstift (38) vorspannt, der Teil der exzentrischen Kopplung ist.

5. Druckzylinder (1) nach einem beliebigen der vorhergehenden Ansprüche, wobei der Betrag von Spiel (39) kleiner als 2 mm und vorzugsweise etwa 1 mm ist.

6. Druckzylinder (1) nach einem beliebigen der vorhergehenden Ansprüche, wobei die maximale Kraft, die durch das elastische Element (50) gewirkt wird, kleiner als 70 N und noch bevorzugter kleiner als 50 N ist.

7. Druckzylinder (1) nach einem beliebigen der vorhergehenden Ansprüche, wobei das Ventilelement (6) durch eine Feder (15) vorgespannt ist.

8. Druckzylinder (1) nach Anspruch 7, wobei der Hebel (27) dazu ausgelegt ist, beim Bewegen von der geschlossenen zur offenen Position eine obere Totpunktposition zu durchlaufen, und die Feder (15) angeordnet ist, um den Hebel (27) in der offenen Position offen vorzuspannen.

9. Druckzylinder (1) nach Anspruch 7 oder Anspruch 8, wobei die Spitzenkraft, die durch das elastische Element (50) erzeugt wird, kleiner als 10 % und vorzugsweise kleiner als 5 % der durch die Feder (15) erzeugten Spitzenkraft ist.

## Revendications

1. Cylindre sous pression (1) comportant une valve de retenue, la valve de retenue comprenant un élément (6) de valve qui assure l'étanchéité avec le siège (11) de valve, une tige (18) de valve accouplée à l'élément (6) de valve, la tige (18) de valve pouvant se déplacer linéairement pour sélectivement approcher et éloigner l'élément (6) de valve du siège (11) de valve pour ouvrir sélectivement la valve ; un levier (27) accouplé par le biais d'un accouplement excentrique à la tige (18) de valve, de telle sorte que la rotation du levier (27) autour d'un axe de pivot provoque le déplacement linéaire de l'élément (6) de valve,
dans lequel entre l'accouplement excentrique et la tige (18) de valve, il y a un certain jeu (39) dans la direction d'ouverture de la valve, le cylindre comprenant en outre un élément élastique (50) destiné à produire une force de sollicitation sur l'accouplement excentrique quand le levier (27) est en position fermée, ce qui maintient l'accouplement excentrique et donc le levier (27) dans une position complètement fermée,
**caractérisé en ce que** la force produite par l'élément élastique (50) sur le levier (27) est agencée pour commencer à diminuer au niveau d'un certain point pendant le déplacement du levier vers une position ouverte.

2. Cylindre sous pression (1) selon la revendication 1, dans lequel l'élément (6) de valve et la tige (18) de valve sont contenus dans un corps (2) de valve, et dans lequel l'élément élastique (50) s'installe sur le corps (2) de valve.

3. Cylindre sous pression (1) selon la revendication 1 ou 2, dans lequel le jeu (39) est assuré par l'accouplement excentrique comportant une goupille de connexion (38) par le biais de laquelle il est accouplé à une fente allongée dans la tige (18) de valve.

4. Cylindre sous pression (1) selon la revendication 3, dans lequel l'élément élastique (50) est une agrafe-ressort qui sollicite la goupille de connexion (38) qui fait partie de l'accouplement excentrique.

5. Cylindre sous pression (1) selon l'une quelconque des revendications précédentes, dans lequel la quantité de jeu (39) est inférieure à 2 mm et de préférence à peu près de 1 mm.

6. Cylindre sous pression (1) selon l'une quelconque des revendications précédentes, dans lequel la force maximale produite par l'élément élastique (50) est inférieure à 70 N et de préférence inférieure à 50 N.

7. Cylindre sous pression (1) selon l'une quelconque des revendications précédentes, dans lequel l'élément (6) de valve est sollicité par un ressort (15) .

8. Cylindre sous pression (1) selon la revendication 7, dans lequel le levier (27) est configuré pour passer par une position de point mort haut en se déplaçant de la position fermée à la position ouverte et le ressort (15) est agencé pour solliciter le levier (27) ouvert en position ouverte.

9. Cylindre sous pression (1) selon la revendication 7 ou 8, dans lequel la force de pic produite par l'élément élastique (50) est inférieure à 10% et de préférence inférieure à 5% de la force de pic produite par le ressort (15).
